# EUROPEAN PATENT SPECIFICATION

(11) **EP 1 262 427 B1**
(45) Date of publication and mention of the grant of the patent: **16.04.2003**
(21) Application number: 01830337.0
(22) Date of filing: 25.05.2001
(51) Int. Cl.: B65G 23/44, B65G 15/64, B65G 39/16

(54) **Device for tightening and guiding a continuous belt**
Spann- und Führungsvorrichtung für ein kontinuierliches Fliessband
Dispositif pour tendre et guider d'une courroie continue

(43) Date of publication of application: 04.12.2002
(73) Proprietor: A.CELLI S.p.A., I-55016 Porcari Lucca (IT)
(72) Inventor: Celli, Piero, 55016 Porcari, Lucca (IT)
(74) Representative: Mannucci, Gianfranco, Dott.-Ing.

(56) References cited:
- EP-A- 0 189 735
- DD-A- 270 278
- DE-U- 1 901 380
- US-A- 5 511 650
- PATENT ABSTRACTS OF JAPAN vol. 1999, no. 14, 22 December 1999 (1999-12-22) & JP 11 246021 A (BANDO CHEM IND LTD), 14 September 1999 (1999-09-14)

## Description

The present invention relates to a device for tightening and guiding a continuous belt, for example a wire or a felt for a continuous paper machine, a goods conveyor belt, or a similar device.

Many industrial applications require the controlled tension and correct guidance of a belt especially if it is particularly wide, for example, in the case of conveyor belts. More specifically, so-called wires with exceptionally wide widths are used in the field of continuous production of paper whereby the slurry of cellulose fibres is positioned on the belt for producing a sheet of paper. These wires must be kept under tension and correctly guided in order to avoid shifting.

At the present, various systems are available for guiding continuous belts and for their controlled tightening, see for example EP-A-0 189 735, which are designed to compensate for any loss of tension caused by the wear on the belts and/or by thermal expansion. These devices are not satisfactory, mostly due to the fact that they are often very voluminous and require an elevated number of components.

The object of the intervention is to provide a device for tightening and guiding a continuous belt that is efficacious, compact, easy to control, and simple to construct.

These and other objects and advantages, which will appear evident to those skilled in the art after reading the ensuing text, are essentially obtained through a device comprised of: a pair of guiding rollers for the belt supported by a frame that oscillates around an axis of oscillation substantially parallel to these rollers in order to modify the inclination of the oscillating frame and the tightness of the belt; at least one tightening member associated with said oscillating frame in order to tighten the belt by inclining the oscillating frame around said axis of oscillation; and an actuating member for modifying the position of the axis of oscillation of the frame and therefore the inclination of the guiding rollers with respect to the belt.

The controlled movements of the tensioning member and the actuating member associated with the frame supporting the guiding rollers enable the belt to be tightened to the desired degree and guide the belt by modifying the transmission angle of the belt around the rollers and the inclination of the axes of the rollers with respect to the direction of the belt movement. In this way, a single compact and easily constructed and controlled device enables the execution of several functions (guiding the belt; setting, controlling, and recovering the tightness of the belt) which would ordinarily be obtained with several different devices.

According to a practical form of embodiment of the invention, the frame includes a pair of parallel beams that support the guiding rollers and are joined together by a transversal bar, at least one end of which is supported by a moveable support and presents its axis parallel to the axis of oscillation of the frame or coextensive with the same.

According to a possible form of embodiment of the device, the axis of oscillation of the frame is supported by spherical supports, at least one of which can move perpendicularly to the axis of oscillation itself. The movement of this support can be obtained by means of a rocker arm. In a particularly advantageous embodiment of the invention, in terms of the construction and mechanics, it can for example be foreseen that the support is integral with a rocker arm whose axis of oscillation is eccentric with respect to the support itself. The actuating member controls the oscillation of the rocker arm and therefore the movement of the center of the spherical support. The possibility is not ruled out that both spherical supports that bear the axis of oscillation of the frame can be mobile.

The device can be equipped with a tension detector for measuring the tightness of the belt and/or with a sensor for detecting the position of the belt. A control unit may also be provided that, on the basis of the signal generated by said detector and/or by said sensor, controls the tensioning member and/or the actuating member in order to modify the position of the axis of oscillation of the oscillating frame and maintain the belt guided in the correct position.

The invention will be easier to understand by reading the description and the annexed drawing, which illustrates a practical non-limiting embodiment of the invention. In the drawing:
Fig. 1 shows a lateral view of the device according to the invention;
Fig. 2 shows a cross section viewed from II-II of Fig. 1 and
Fig. 3 shows a plan view viewed from III-III of Fig. 1.

In the embodiment shown in the drawings, the belt tensioning and guiding device is designated 1 as a whole, the belt which can for example be the wire of a papermaking machine being designated N as a whole. Arrow fN indicates the direction of motion of the belt N that is entrained arounda first guiding roller 3 and a second guiding roller 5. The complete length of the run of the belt N is not comprehensively represented, since it is not relevant for the purpose of the present description. By 7 is generically designated another guiding roller along which the belt travel, and with which a sensor can be associated, for example a load cell, generically designated 9, for the purposes that will be described later.

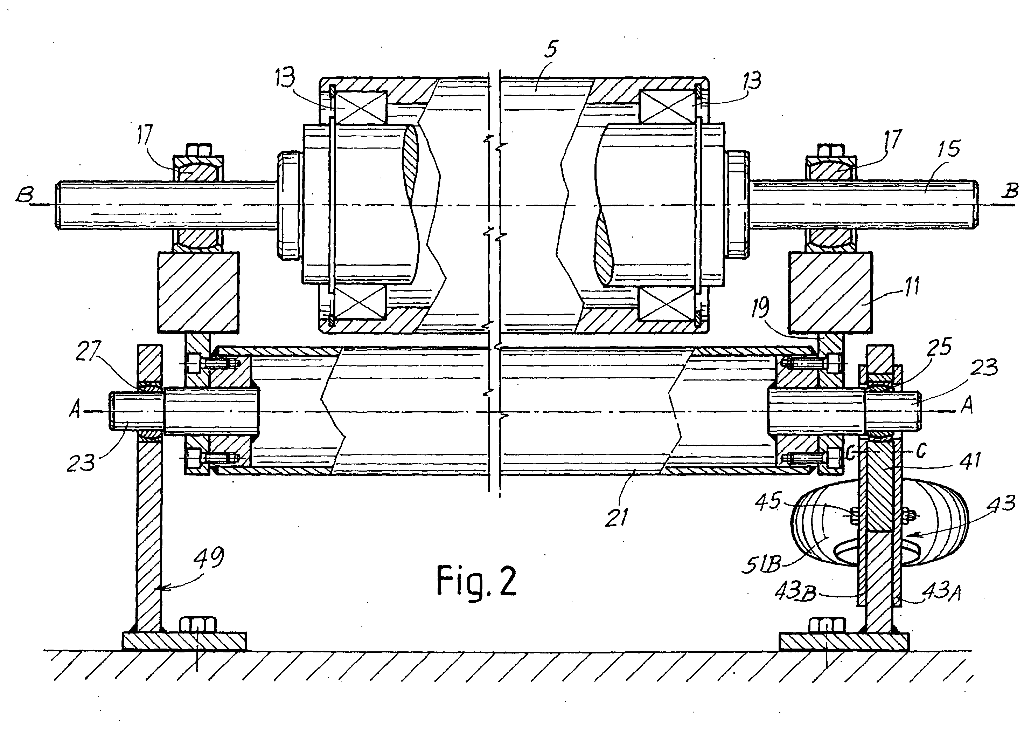

The two guiding rollers 3 and 5 are supported at their ends on two parallel beams 11. In the example illustrated (as visible in the detail in Fig. 2 for roller 5) each guiding roller 3 and 5 is supported by revolving bearings 13 positioned inside the rollers, mounted on axes 15, which are in turn supported outside the guiding rollers by means of spherical bearings 17 integral with the beams 11. The possibility is not ruled out of supporting each guiding roller 3 and 5 by means of external bearings mounted onto the beams 11, for example, bearings with barrel-shaped rollers, that enable an oscillation or inclination of the axes of the guiding rollers 3 and 5, for purposes that will be clear later. In the illustrated embodiment, the inclination variation of the axes of the guiding rollers 3 and 5 is enabled by the spherical bearings 17.

The two beams 11 are joined, by means of plates 19, with a tubular transversal torsion bar 21. From the transversal bar 21, supporting pins 23 project out which are supported by a pair of spherical supports 25, 27 (see Fig. 2). The pins 23 define an axis A-A of oscillation of the frame made up of beams 11 and by transversal bar 21. The axis A-A is substantially parallel to the axis B-B of the guiding rollers 3 and 5 when these form a 90° angle with the beams 11 and the transversal bar 21.

One of the beams 11 is associated with a tightening member 31, constituted, in the example illustrated, by a so-called tripled-loop torpress, but which can also be formed by a cylinder-piston actuator or a different suitable device. Two tightening members 31 can also be provided, one for each beam 11 or even four tightening members, two for each beam, arranged on opposite sides with respect to the axis A-A. Alternatively, a pair of tightening members associated with the same beam and arranged on opposite sides of the axis A-A can be provided.

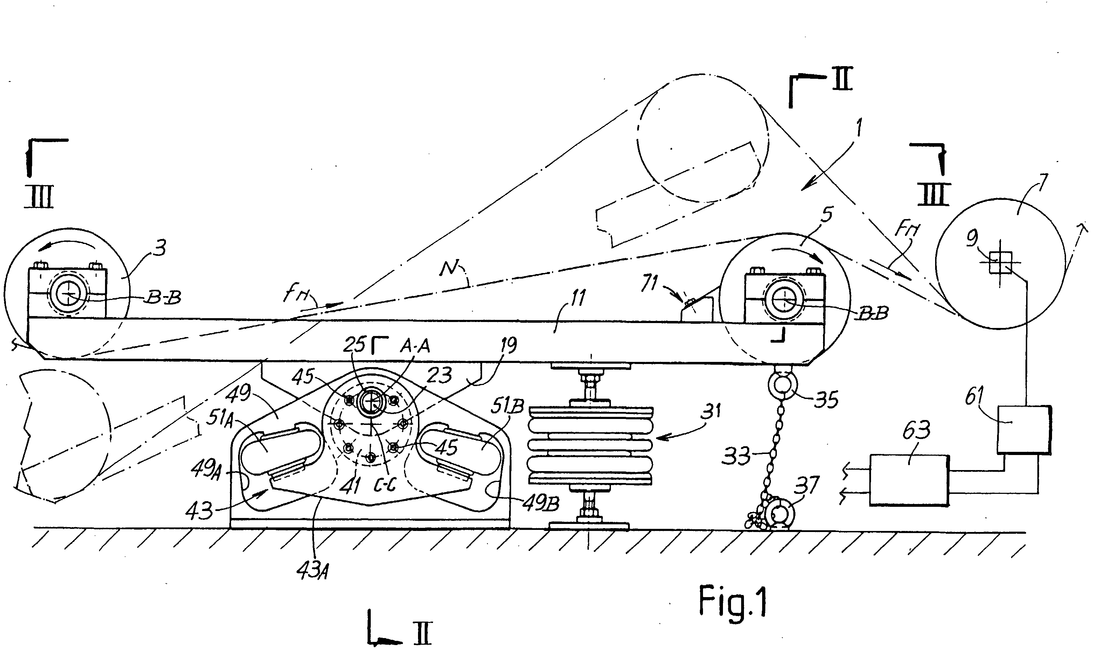

By controlling the pressure of the fluid inside the tightening member 31, the frame formed by the beams 11 and the bar 21 is caused to oscillate around the axis A-A. This oscillation causes the belt N to tighten until the desired value is reached. Fig. 1 shows with solid line a position where the beams 11 are in a horizontal position and the tension on the belt N is relatively modest. The tension can be further reduced by rotating the beams 11 in a clockwise direction and thereby reducing the angle of deviation of the belt N around the two rollers 3 and 5. A slightly more inclined position of the beams 11 is shown with a dotted line, a position which yields a tighter tension of the belt N and a greater angle of deviation of the belt N around the two rollers 3 and 5. The tightness of belt N can be detected by means of the load cell 9 associated with the guiding roller 7, not excluding however, the possibility of positioning a load cell directly on one of the two guiding rollers 3 or 5, or on both, or in any other suitable point along the closed travel of the belt N.

One of the beams 11 is connected to a chain 33 by means of an eyebolt 35. At its opposite end the chain 33 is linked to another eyebolt 37, anchored to a stationary structure. The chain 33 constitutes a device for limiting the oscillation of the frame formed by the beams 11 and by the transversal bar 21, to prevent damaging the tensioning member 31.

As can be seen in particular in Fig. 2, while the spherical support 27 of the transversal bar 21 on one of the sides of the device is fixedly mounted onto a supporting plate, the spherical support 25 on the opposite side is mounted inside a disk 41 whose center lies on an axis C-C. This disk is integral with a rocker arm designated 43 and formed by two portions 43A, 43B, exactly identical in size and rigidly connected to each other and to the disk 41 by means of through screws 45.

Disk 41 is inserted into a circular housing realized in a supporting unit 49 integral with a stationary structure. The unit 49 presents a pair of openings 49A and 49 B, in which two pneumatic or hydraulic actuators 51A and 51B are housed, for example two so-called torpresses. The controlled introduction of a pressurized fluid into the actuators 51A and 51 B causes their controlled expansion or contraction. By operating the two actuators 51A and 51B symmetrically, the oscillation of the rocker arm 43 is obtained around the axis C-C, since the actuators 51A and 51B are joined on one side to the supporting unit 49 and on the opposite side to corresponding appendages of the rocker arm 43 (see in particular in Fig. 1).

Since the spherical support 25 is placed eccentrically with respect to the axis C-C of the disk 41, integral with the rocker arm 43 and bearing the spherical support 25 itself, an oscillation of the rocker arm 43 controlled by the actuators 51A and 51B causes the axis of the spherical support 25 to shift along a circular trajectory. The radius of the circular trajectory is equal to the eccentricity of the support 25 with respect to the axis of the disk 41.

Therefore, by means of a balanced and controlled expansion and contraction of the two actuators 51A and 51B, it is possible to cause the controlled movement of the spherical support 25. This results in an oscillating movement of the transversal bar 21 around the center of the support 27 and therefore, an unequal movement of the two beams 11. This results in a variation in the inclination of the axes of the guiding rollers 3 or 5 with respect to the direction of motion of belt N entrained around said rollers.

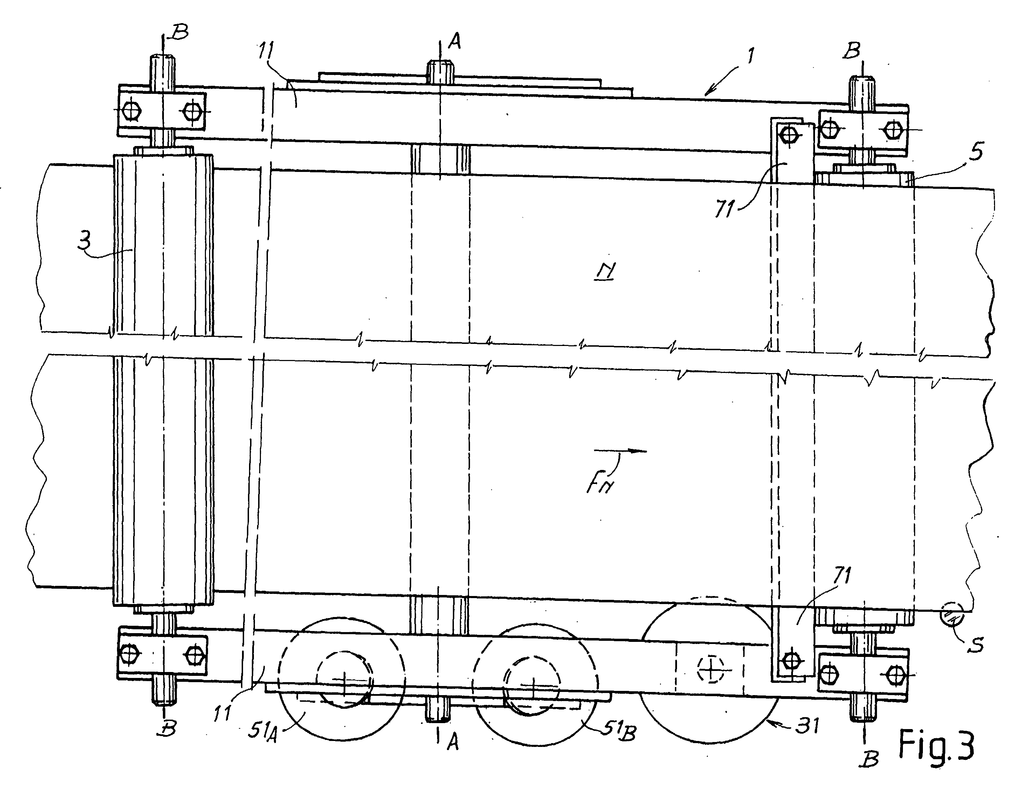

Therefore, a controlled oscillation of the rocker arm 43 enables the belt N to be correctly guided. By positioning a sensor, for example an optical or mechanical sensor, to detect the position of the edge of the belt N (as schematically shown at S in Fig. 3) it is possible to generate a control signal that causes the actuators 51A and 51 B to intervene and keep the edge of the belt N in the desired position and therefore guide the belt itself by shifting the axis A-A of the transversal bar 21 and an tilting the axes of the guiding rollers 3, 5 with respect to the direction fN.

In Fig. 1 a control unit is diagrammatically shown at 61 which receives an input signal from the load cell 9 and from the sensor S detecting the position of the edge of belt N. The control unit 61 correspondingly sends control signals to a hydraulic central unit 63 connected to the actuators 51A and 51 B and the tightening member 31. Depending on the tension that must be obtained on the belt, the signal received from the load cell 9 and the signal received from the sensor S detecting the position of the edge of the belt N, 11 by means of the hydraulic central unit 63 the control unit 61 controls the movements of the device 11 that therefore maintains the desired tightness of the belt N and effectively guides the belt.

The spherical supports 17 on the ends of the guiding rollers 3 and 5 enable the movements of the beams 11 consequent to the oscillation of the transversal bar 21 around the center of support 27 when the spherical support 25 moves around the axis C-C of the rocker arm 43.

The possibility is not ruled out of providing a movable spherical support 27 which can be mounted in a symmetrical way to the spherical support 25 and controlled in a mirror image. This can enable a greater breadth of the correction intervention, but however, results in an increase in the construction costs of the device and a greater complexity of the control system.

The rocker arm 43 is associated with two symmetrical actuators 51A and 51 B that form, with their symmetric control, a single actuator to control the translation of the axis A-A of oscillation of the frame 11, 21. The possibility of using actuators of other types is not ruled out, for example, constituted by a single cylinder-piston actuator.

Control over the various movements, obtained in this embodiment by means of hydraulically-driven actuator members, can be obtained with a system of pneumatic actuators or even with other types of actuators, for example electrical or similar.

The frame, comprised of the beams 11 and the transversal bar 21 can be associated with scraping devices that cooperate with the guiding rollers 3 and 5 to keep the surface clean. This device is represented schematically by a scraper 71 associated with the guiding roller 5. A similar means can be associated with the guiding roller 3. Other cleaning means can be used, for example brushes or similar elements. The use of cleaning means for cleaning the surface of the guiding rollers 3 and 5 is particularly advantageous when the device is used for the tightening and the guidance of a wire for forming paper, so as to prevent cellulose fibers from accumulating on the rollers 3 and 5.

It is understood that the drawing shows exclusively a practical embodiment of the invention, since the invention can vary widely in the forms and layouts without departing from the scope of the basic concept of the invention itself. The use of reference numbers in the claims included herein has the purpose of facilitating their reading with reference to the description and the drawings and does not limit the scope of protection represented by the claims.

## Claims

1. A device for tightening and guiding a continuous belt, including:
• a pair of guiding rollers (3,5) for the belt (N) supported by a frame (11, 21), oscillating around an axis of oscillation (A-A) substantially parallel to said rollers, in order to modify the inclination of the oscillating frame and the tightness of the belt;
• at least one tightening member (31) associated with said oscillating frame, in order to tighten said belt by inclining the oscillating frame around said axis of oscillation (A-A); **characterised by**
• an actuating member (51A, 51 B) for modifying the position of the axis of oscillation (A-A) of the frame and, therefore, the inclination of the guiding rollers (3, 5) with respect to the belt (N).

2. A device according to Claim 1, in which said frame includes pair of parallel beams (11) supporting said guiding rollers (3, 5) and connected by a transversal bar (21), at least one end of which is supported by a movable support (25), the axis (A-A) of said transversal bar (21) being parallel to said axis of oscillation or coextensive therewith.

3. A device according to Claim 1 or 2, in which said axis of oscillation (A-A) of the frame is supported by spherical supports (25, 27) at least one of which (25) can move perpendicular to the axis of oscillation.

4. A device according to Claim 3, in which said spherical support (25) is integral with a rocker arm (43), controlled by said actuator member (51A, 51B).

5. A device according to Claim 4, in which said rocker arm (43) oscillates around an axis (C-C) that is eccentric with respect to the center of the spherical support (25) integral therewith.

6. A device according ton Claim 5, in which said rocker arm (43) is connected to a pair of expansible components (51A, 51B) constituted said actuating member and whose expansions and contractions controlled by a pressurized fluid control the angular movement of the rocker arm (43).

7. A device according to one or more of the previous Claims, in which said guiding rollers are supported by spherical bearings.

8. A device according to one or more of the previous Claims, including a tightness detector (9) for detecting the tightness of said belt and a control unit (61) that, on the basis of the signal generated by said detector, controls said tightening member (31).

9. A device according to one or more of the previous Claims, including a sensor (S) for detecting the position of said belt (N) and a control unit (61) that, on the basis of the signal generated by said sensor, controls said actuating member (51A, 51B) in order to modify the position of the axis of oscillation (A-A) of said oscillating frame (11, 21) and maintain the belt guided in the correct position.

10. A device according to one or more of the previous Claims, in which said tightening member (31) includes at least one pneumatically or hydraulically controlled member.

11. A device according to Claim 10, in which said tightening member (31) includes a limiting device (33) that limits the oscillation travel of the frame.

12. A device according to one or more of the previous Claims, including scraping means(71) to clean the surface of said guiding rollers.

13. A device according to one or more of the previous Claims, in which said guiding rollers are supported by internal bearings (13) carried by axes (15) in turn supported by spherical supports (17) integral with said oscillating frame (11, 21).

## Patentansprüche

1. Vorrichtung zum Spannen und Führen eines Endlosbandes, umfassend:
- ein Paar von Führungsrollen (3, 5) für das Band (N), die von einem Rahmen (11, 21) getragen werden, der um eine zu den Rollen im wesentlichen parallele Schwenkachse (A-A) schwenkbar ist, um die Neigung des Schwenkrahmens und die Straffheit des Bandes zu verändern; und
- mindestens ein Spannglied (31), das dem Schwenkrahmen zugeordnet ist, um das Band durch Neigen des Schwenkrahmens um seine Schwenkachse (A-A) zu spannen; **gekennzeichnet durch**
- ein Betätigungsglied (51a, 51b) zum Verändern der Position der Schwenkachse (A-A) des Rahmens und damit der Neigung der Führungsrollen (3, 5) bezüglich des Bandes N.

2. Vorrichtung nach Anspruch 1,
bei der der Rahmen zwei parallele Balken (11) aufweist, die die Führungsrollen (3, 5) tragen und durch eine Querstange (21) verbunden sind, von der mindestens ein Ende durch eine bewegliche Abstützung (25) abgestützt ist, wobei die Achse (A-A) der Querstange (21) parallel zu der Schwenkachse ist oder mit dieser zusammenfällt.

3. Vorrichtung nach Anspruch 1 oder 2,
bei der die Schwenkachse (A-A) des Rahmens von sphärischen Abstützungen (25, 27) getragen wird, von denen mindestens eine (25) rechtwinklig zu der Schwenkachse bewegbar ist.

4. Vorrichtung nach Anspruch 3,
bei der die sphärische Abstützung (25) mit einem Schwenkarm (43) verbunden ist, der durch das Betätigungsglied (51a, 51b) gesteuert ist.

5. Vorrichtung nach Anspruch 4,
bei der der Schwenkarm (43) um eine Achse (C-C) schwenkbar ist, die exzentrisch zum Mittelpunkt der mit ihm verbundenen sphärischen Abstützung (25) ist.

6. Vorrichtung nach Anspruch 5,
bei der der Schwenkarm (43) mit einem Paar von expandierbaren Komponenten (51A, 51B) verbunden ist, die das Betätigungsglied bilden und deren von einem Druckfluid gesteuerte Expansionen und Kontraktionen die Winkelbewegung des Schwenkarms (43) steuern.

7. Vorrichtung nach einem oder mehreren der vorangehenden Ansprüche,
bei der die Führungsrollen durch sphärische Lager gelagert sind.

8. Vorrichtung nach einem oder mehreren der vorangehenden Ansprüche,
mit einem Spannungsfühler (9) zum Erfassen der Straffheit des Bandes und mit einer Steuereinheit (61), die aufgrund eines von dem Detektor erzeugten Signals das Spannglied (31) steuert.

9. Vorrichtung nach einem oder mehreren der vorangehenden Ansprüche, mit einem Sensor (S) zum Delektieren der Position des Bandes (N) und mit einer Steuereinheit (61), die aufgrund eines von dem Sensor erzeugten Signals das Betätigungsglied (51A, 51B) steuert, um die Position der Schwenkachse (A-A) des Schwenkrahmens (11, 21) zu verändern und das Band in der korrekten Position geführt zu halten.

10. Vorrichtung nach einem oder mehreren der vorangehenden Ansprüche,
bei der das Spannglied (31) mindestens ein pneumatisch oder hydraulisch gesteuertes Glied aufweist.

11. Vorrichtung nach Anspruch 10,
bei der das Spannglied (31) einen Begrenzer (33) enthält, der den Schwenkweg des Rahmens begrenzt.

12. Vorrichtung nach einem oder mehreren der vorangehenden Ansprüche,
mit einer Abstreifeinrichtung (71) zum Reinigen der Oberfläche der Führungsrollen.

13. Vorrichtung nach einem oder mehreren der vorangehenden Ansprüche, bei der die Führungsrollen auf inneren Lagern (13) gelagert sind, die von Achsen (15) getragen werden, die ihrerseits von sphärischen Abstützungen (17) abgestützt werden, die mit dem Schwenkrahmen (11, 21) verbunden sind.

## Revendications

1. Dispositif pour raidir et guider une courroie continue, comprenant :
une paire de rouleaux de guidage (3, 5) pour la courroie (N) supportée par un châssis (11, 21), oscillant autour d'un axe d'oscillation (A-A) sensiblement parallèle auxdits rouleaux, afin de modifier l'inclinaison du châssis d'oscillation et la raideur de la courroie ;
au moins un élément de raidissement (31) associé audit châssis oscillant, afin de raidir ladite courroie en inclinant le châssis oscillant autour dudit axe d'oscillation (A-A) ; **caractérisé par**
un élément d'actionnement (51A, 51B) pour modifier la position de l'axe d'oscillation (A-A) du châssis, et, en conséquence, l'inclinaison des rouleaux de guidage (3, 5) par rapport à la courroie (N).

2. Dispositif selon la revendication 1, dans lequel ledit châssis comprend une paire de poutres parallèles (11) supportant lesdits rouleaux de guidage (3, 5) et connectées par une barre transversale (21), dont au moins une extrémité est supportée par un support mobile (25), l'axe (A-A) de ladite barre transversale (21) étant parallèle audit axe d'oscillation ou coextensif à celui-ci.

3. Dispositif selon la revendication 1 ou la revendication 2, dans lequel ledit axe d'oscillation (A-A) du châssis est supporté par des supports sphériques (25, 27) dont au moins un (25) peut se déplacer perpendiculairement par rapport à l'axe d'oscillation.

4. Dispositif selon la revendication 3, dans lequel ledit support sphérique (25) forme un seul tenant avec un bras oscillant (43), commandé par ledit élément d'actionnement (51A, 51B).

5. Dispositif selon la revendication 4, dans lequel ledit bras oscillant (43) oscille autour d'un axe (C-C) qui est excentrique par rapport au centre du support sphérique (25) formant un seul tenant avec celui-ci.

6. Dispositif selon la revendication 5, dans lequel ledit bras oscillant (43) est connecté à une paire de composants extensibles (51A, 51B) constituant ledit élément d'actionnement et dont les extensions et les contractions commandées par un fluide pressurisé commandent le mouvement angulaire du bras oscillant (43).

7. Dispositif selon une ou plusieurs des revendications précédentes, dans lequel lesdits rouleaux de guidage sont supportés par des paliers sphériques.

8. Dispositif selon une ou plusieurs des revendications précédentes, comprenant un détecteur de raideur (9) pour détecter la raideur de ladite courroie et une unité de commande (61) qui, en se basant sur le signal généré par ledit détecteur, commande ledit élément de raidissement (31).

9. Dispositif selon une ou plusieurs des revendications précédentes, comprenant un capteur (S) pour détecter la position de ladite courroie (N) et une unité de commande (61) qui, en se basant sur le signal généré par ledit capteur, commande ledit élément d'actionnement (51A, 51B) afin de modifier la position de l'axe d'oscillation (A-A) dudit châssis oscillant (11, 21) et de maintenir la courroie guidée dans la position correcte.

10. Dispositif selon une ou plusieurs des revendications précédentes, dans lequel ledit élément de raidissement (31) comprend au moins un élément à commande hydraulique ou pneumatique.

11. Dispositif selon la revendication 10, dans lequel ledit élément de raidissement (31) comprend un dispositif de limitation (33) qui limite la course d'oscillation du châssis.

12. Dispositif selon une ou plusieurs des revendications précédentes, comprenant des moyens de raclage (71) pour nettoyer la surface desdits rouleaux de guidage.

13. Dispositif selon une ou plusieurs des revendications précédentes, dans lequel lesdits rouleaux de guidage sont supportés par des paliers internes (13) supportés par des axes (15) à leur tour supportés par des supports sphériques (17) formant un seul tenant avec ledit châssis oscillant (11, 21).
